# EUROPÄISCHE PATENTANMELDUNG

(11) **EP 3 647 892 A1**
(43) Veröffentlichungstag der Anmeldung: **06.05.2020**
(21) Anmeldenummer: 18203480.1
(22) Anmeldetag: 30.10.2018
(51) Int. Cl.: G05B 19/4063, G05B 19/414

(54) **STEUERSYSTEM UND VERFAHREN ZUM STEUERN EINER WERKZEUGMASCHINE**

(71) Anmelder: Siemens Aktiengesellschaft, 80333 München (DE)
(72) Erfinder: Klein, Wolfram, 85579 Neubiberg (DE); Malik, Vincent, 80636 München (DE); Wehrstedt, Jan Christoph, 81829 München (DE); Zhou, Yayun, 81739 München (DE)

(57) **Zusammenfassung**

Die Erfindung betrifft ein Steuersystem und ein Verfahren zum Steuern mindestens einer Werkzeugmaschine. Das Steuersystem (CS) umfasst mindestens eine erste Steuereinheit (CU1_1) und mindestens eine zweite Steuereinheit (CU2 1). Der ersten Steuereinheit (CU1_1) wird ein erster Steuerbefehl für eine erste Funktion einer Werkzeugmaschine M1, deren Ausführung zeitkritisch, qualitätskritisch und/oder ressourcenintensiv ist, zugeordnet. Der zweiten Steuereinheit (CU2 1) wird ein zweiter Steuerbefehl für eine zweite Funktion einer Werkzeugmaschine, deren Ausführung sicherheitskritisch, nicht zeitkritisch, nicht qualitätskritisch und/oder nicht ressourcenintensiv ist, zugeordnet. Das Steuersystem (CS) ist separiert von einer zu steuernden Werkzeugmaschine und ist derart eingerichtet, die erste Funktion einer Werkzeugmaschine (M1) mittels der ersten Steuereinheit (CU1_1) und die zweite Funktion mindestens einer Werkzeugmaschine mittels der zweiten Steuereinheit (CU2_1) zu steuern.

## Beschreibung

Die Erfindung betrifft ein Steuersystem und ein computergestütztes Verfahren zum Steuern von mindestens einer Werkzeugmaschine, wobei das Steuersystem separiert von der zu steuernden Werkzeugmaschine eingerichtet ist und mindestens eine erste und eine zweite Steuereinheit umfasst.

Traditionelle Werkzeugmaschinen werden in der Regel durch eine Steuereinheit, die einen Betrieb der Maschine regelt, und einer übergeordneten Steuerung, die eine Interaktion zwischen Maschinen regelt, gesteuert. Ein System von Werkzeugmaschinen, z.B. für einen Herstellungsprozess, umfasst in der Regel mehrere Werkzeugmaschinen, die unterschiedliche Aufgaben erfüllen. Bei einem einfachen System, welches beispielsweise keine zentrale Koordination der Steuerfunktionen benötigt, sind die Steuereinheiten der einzelnen Werkzeugmaschinen auf diesen implementiert und/oder direkt mit diesen gekoppelt. In anderen Worten, jeder Werkzeugmaschine ist eine Steuereinheit zugeordnet und oder eine zentrale Steuereinheit steuert das System aus Werkzeugmaschinen. Bei einem Ausfall oder einer Fehlfunktion einer Steuereinheit muss in der Regel die dadurch gesteuerte Werkzeugmaschine aus dem Betrieb genommen werden. Die Funktionen dieser Werkzeugmaschine sind damit in der Regel bis zur Reparatur der Steuereinheit nicht nutzbar. Dies kann zu einer erheblichen Einschränkung in einer Produktion und/oder eines Betriebsablaufs führen.

Es ist somit eine Aufgabe der vorliegenden Erfindung, eine flexible Steuerung für Werkzeugmaschinen zu schaffen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung ein Steuersystem zum Steuern einer Werkzeugmaschine, umfassend eine erste Steuereinheit und eine zweite Steuereinheit, wobei
- ein erster Steuerbefehl für eine erste Funktion einer Werkzeugmaschine, deren Ausführung zeitkritisch, qualitätskritisch und/oder ressourcenintensiv ist, der ersten Steuereinheit zugeordnet ist,
- ein zweiter Steuerbefehl für eine zweite Funktion einer Werkzeugmaschine, deren Ausführung sicherheitskritisch, nicht zeitkritisch, nicht qualitätskritisch und/oder nicht ressourcenintensiv ist, der zweiten Steuereinheit zugeordnet ist, und
- das Steuersystem separiert von einer zu steuernden Werkzeugmaschine und derart eingerichtet ist, eine erste Funktion der Werkzeugmaschine mittels der ersten Steuereinheit und eine zweite Funktion der Werkzeugmaschine mittels der zweiten Steuereinheit zu steuern.

Es ist ein Vorteil der Erfindung, dass mindestens eine Werkzeugmaschine vom Steuersystem gesteuert werden kann, wobei Funktionen der Werkzeugmaschinen von der ersten oder zweiten Steuereinheit kontrolliert wird und die Steuerung separiert von der Werkzeugmaschine realisiert wird. Somit kann insbesondere eine flexible, robuste, zuverlässige und/oder ggf. kostengünstige Steuerung von einer oder mehreren Werkzeugmaschinen erzielt werden. Die Steuerung kann vorzugsweise hierarchisch aufgebaut sein, d.h. die erste Steuereinheit und die zweite Steuereinheit können hierarchisch angeordnet sein. Dazu werden Steuerbefehle für Funktionen der Werkzeugmaschinen vorteilhaft der ersten oder zweiten Steuereinheit, abhängig davon ob die Ausführung der Funktionen sicherheitskritisch, zeitkritisch, qualitätskritisch und/oder ressourcenintensiv sind, zugeordnet und von der jeweiligen Steuereinheit ausgeführt.

Die erste und/oder zweite Steuereinheit kann hardwaretechnisch und/oder softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die erste Steuereinheit regelt die Ausführung von Funktionen einer Werkzeugmaschine, die zeitkritisch, qualitätskritisch und/oder ressourcenintensiv, wie z.B. daten- und/oder rechenintensiv, sind. Insbesondere kann damit die benötigte Bandbreite für eine Datenübertragung zur Werkzeugmaschine reduziert werden. Beispiele für erste Funktionen sind insbesondere Echtzeitfunktionen, aufwändige Berechnungen, Steuerungen von Aktoren oder ähnliches. Die erste Steuereinheit kann insbesondere auf dem Prinzip des Edge-Computing beruhen, d.h. die erste Steuereinheit regelt vorzugsweise lediglich Funktionen mindestens einer Werkzeugmaschine, die nahe an der Werkzeugmaschine bzw. dezentral durchgeführt werden sollen.

Die zweite Steuereinheit regelt vorzugsweise lediglich Funktionen mindestens einer Werkzeugmaschine die sicherheitskritisch, nicht zeitkritisch, nicht qualitätskritisch und/oder nicht ressourcenintensiv. Beispielsweise betreffen zweite Steuerbefehle Funktionen, für die ein geringerer Datenaustausch nötig ist oder die global oder zentral ausgeführt werden können. Zum Beispiel können zweite Funktionen Sicherheitsfunktionen und/oder Wartungsfunktionen sein. Die zweite Steuereinheit kann vorzugsweise auf dem Prinzip des Cloud-Computing beruhen.

In anderen Worten, die erste bzw. die zweite Steuereinheit kann jeweils derart eingerichtet sein, einen ersten bzw. den zweiten Steuerbefehl an mindestens eine Werkzeugmaschine zu übermitteln, so dass diese dazu veranlasst wird die entsprechende Funktion auszuführen.

Das vorgeschlagene Steuersystem kann mindestens eine Werkzeugmaschine steuern, wobei die Ansteuerung der Funktionen der Werkzeugmaschine auf die erste und zweite Steuereinheit aufgeteilt werden kann. Dies ermöglicht insbesondere eine flexible und robuste Steuerung, da das Steuersystem von der Werkzeugmaschine separat realisiert sein kann. Das Steuersystem kann beispielsweise eine weitere Werkzeugmaschine mit zumindest ähnlichen Funktionen steuern. Dadurch kann einem System oder einer Anlage aus mehreren Werkzeugmaschinen eine weitere Werkzeugmaschine hinzugefügt und vom vorgeschlagenen Steuersystem gesteuert werden.

Durch die vorgeschlagenen zwei hierarchisch angeordneten Ebenen eines Steuersystems für eine Mehrzahl an Werkzeugmaschinen können insbesondere unnötiger Datenverkehr vermieden, Latenzzeiten verringert, Ressourcen gespart und Servicequalität verbessert werden. Außerdem können weitere Werkzeugmaschinen angeschlossen und vom Steuersystem gesteuert werden, d.h. das Steuersystem ist leicht skalierbar.

In einer vorteilhaften Ausführungsform kann das Steuersystem mit einem Bereitstellungsmodul gekoppelt sein, das derart eingerichtet ist, Funktionen der Werkzeugmaschine zu ermitteln und zu bestimmen, ob deren Ausführung sicherheitskritisch, zeitkritisch, ressourcenintensiv ist, und dem Steuersystem bereitzustellen.

Vorzugsweise können Funktionen von mindestens einer Werkzeugmaschine anhand von funktionsspezifischen Merkmalen als sicherheitskritisch, qualitätskritisch, zeitkritisch und/oder ressourcenintensiv charakterisiert und auf Basis dieser Charakterisierung der ersten Steuereinheit oder der zweiten Steuereinheit zugeordnet werden. Das Bereitstellungsmodul kann beispielsweise separat vom Steuersystem eingerichtet, in diesem integriert oder mit diesem verbunden sein.

Insbesondere können mittels des Bereitstellungsmoduls Gruppen von gleichartigen Funktionen, die zumindest von einem Teil einer Mehrzahl an Werkzeugmaschinen ausgeführt werden können. Unter "gleichartigen Funktionen" sind insbesondere Funktionen zu verstehen, deren Ausführung durch einen gleichen Steuerbefehl geregelt werden kann. Es kann vorzugsweise eine erste oder zweite Funktion, die von mehr als einer Werkzeugmaschine ausgeführt werden kann, von einer ersten oder zweiten Steuereinheit gesteuert werden.

In einer vorteilhaften Ausführungsform kann das Steuersystem mehr als eine erste und/oder mehr als eine zweite Steuereinheit umfassen.

Vorzugsweise kann das Steuersystem mehr als eine erste und/oder zweite Steuereinheit umfassen, wobei die ersten Steuereinheiten erste Steuerbefehle und die zweiten Steuereinheiten zweite Steuerbefehle ausgeben. Damit kann eine Redundanz bei den Steuereinheiten erzielt werden, so dass eine Steuerung gewährleistet und/oder flexiblere Steuerung mehrerer Werkzeugmaschinen ermöglicht werden kann.

In einer vorteilhaften Ausführungsform des Steuersystems kann der ersten und/oder zweiten Steuereinheit jeweils mehr als ein erster oder zweiter Steuerbefehl zugeordnet sein.

Eine erste bzw. zweite Steuereinheit kann insbesondere mehr als eine erste bzw. zweite Funktion und/oder eine Gruppe von Funktionen mindestens einer Werkzeugmaschine steuern.

In einer vorteilhaften Ausführungsform des Steuersystems kann eine erste Steuereinheit und/oder zweite Steuereinheit mehr als eine Werkzeugmaschine steuern.

Vorzugsweise kann eine erste bzw. zweite Steuereinheit die Steuerung einer ersten bzw. zweiten Funktion, die von mehr als einer Werkzeugmaschine ausgeführt werden kann, steuern.

In einer vorteilhaften Ausführungsform des Steuersystems kann einer zweiten Steuereinheit zumindest temporär mindestens ein erster Steuerbefehl zugeordnet sein und die zweite Steuereinheit kann mittels dieses ersten Steuerbefehls zumindest temporär die dem Steuerbefehl entsprechende Funktion der Werkzeugmaschinen steuern.

Beispielsweise kann bei einem Ausfall und/oder einer Überlastung einer ersten Steuereinheit zumindest temporär der ihr zugeordnete erste Steuerbefehl von einer zweiten Steuereinheit übernommen und von dieser ausgegeben werden. Dies kann insbesondere als Backup implementiert werden.

In einer vorteilhaften Ausführungsform des Steuersystems können die ersten Steuereinheiten und die zweiten Steuereinheiten derart miteinander gekoppelt sein, dass eine Steuerung der Werkzeugmaschinen über einen Abstimmungsprozess untereinander koordiniert werden kann.

Der Abstimmungsprozess kann insbesondere zentral oder dezentral realisiert sein. Beispielsweise kann im Steuersystem mittels des Abstimmungsprozesses eine Ausgabenreihenfolge für erste und zweite Steuerbefehle bestimmt werden.

Ein weiterer Aspekt der Erfindung betrifft ein computergestütztes Verfahren zum Steuern einer Werkzeugmaschine, wobei
- ein erster Steuerbefehl für eine erste Funktion einer Werkzeugmaschine, deren Ausführung zeitkritisch, qualitätskritisch und/oder ressourcenintensiv ist, einer ersten Steuereinheit zugeordnet wird,
- ein zweiter Steuerbefehl für eine zweite Funktion einer Werkzeugmaschine, deren Ausführung sicherheitskritisch, nicht zeitkritisch, nicht qualitätskritisch und/oder nicht ressourcenintensiv ist, einer zweiten Steuereinheit zugeordnet wird,
- die erste Funktion einer Werkzeugmaschine mittels der ersten Steuereinheit und die zweite Funktion mittels der zweiten Steuereinheit eines Steuersystems, das die erste Steuereinheit und die zweite Steuereinheit umfasst und separiert von der zu steuernden Werkzeugmaschine eingerichtet ist, gesteuert werden.

Unter "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Sofern es in der Beschreibung nicht anders angegeben ist, beziehen sich die Begriffe "ermitteln", "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

In einer vorteilhaften Ausführungsform des computergestützten Verfahrens können Funktionen der Werkzeugmaschinen ermittelt werden und es kann bestimmt werden, ob deren Ausführung sicherheitskritisch, qualitätskritisch, zeitkritisch und/oder ressourcenintensiv ist.

Insbesondere können die Funktionen als erste oder zweite Funktionen gemäß der Erfindung klassifiziert und ausgegeben werden.

In einer vorteilhaften Ausführungsform des computergestützten Verfahrens können für die ermittelten Funktionen jeweils entsprechende Steuerbefehle ermittelt werden.

Für erste Funktionen können erste Steuerbefehle ermittelt und diese mindestens einer ersten Steuereinheit zugeordnet werden. Entsprechend können für zweite Funktionen zweite Steuerbefehle ermittelt werden und diese mindestens einer zweiten Steuereinheit zugeordnet werden. Unter "ermitteln" kann insbesondere ableiten von Parametern und/oder einer Funktionalität einer Werkzeugmaschine aus beispielsweise einem Maschinenblatt verstanden werden. Die abgeleiteten Funktionen können beispielsweise in einen computerausführbaren Programmcode übersetzt und der jeweiligen Steuereinheit bereitgestellt werden.

In einer vorteilhaften Ausführungsform des computergestützten Verfahrens können mehrere Werkzeugmaschinen von dem Steuersystem gesteuert werden, wobei das Steuersystem mehr als eine erste Steuereinheit und/oder mehr als eine zweite Steuereinheit umfassen kann.

In einer vorteilhaften Ausführungsform des computergestützten Verfahrens kann ein erster und/oder zweiter Steuerbefehl jeweils mehr als einer ersten und/oder zweiten Steuereinheit zugeordnet werden.

In einer vorteilhaften Ausführungsform des computergestützten Verfahrens können mehr als eine Werkzeugmaschine von einer ersten Steuereinheit und/oder einer zweiten Steuereinheit gesteuert werden.

In einer vorteilhaften Ausführungsform des computergestützten Verfahrens kann einer zweiten Steuereinheit zumindest temporär mindestens ein erster Steuerbefehl zugeordnet werden und dieser kann zumindest temporär von dieser zweiten Steuereinheit ausgegeben werden.

In einer vorteilhaften Ausführungsform des computergestützten Verfahrens kann die Steuerung der Werkzeugmaschinen über einen Abstimmungsprozess zwischen den Steuereinheiten, bei dem die ersten Steuereinheiten und die zweiten Steuereinheiten untereinander Daten austauschen koordiniert werden.

Insbesondere kann mittels eines Abstimmungsprozesses die Steuerungsreihenfolge mehrerer Werkzeugmaschinen effizient bestimmt werden.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, das Verfahren/die Schritte eines Verfahrens auszuführen.

Ein Computerprogrammprodukt kann beispielsweise auf einem Speichermedium, wie z.B. Speicherkarte, USB-Stick, CD-ROM, DVD, oder auch in Form einer herunterladbaren Datei von einem Server in einem Netzwerk bereitgestellt oder geliefert werden.

Ausführungsbeispiele des erfindungsgemäßen Steuersystems und computergestützten Verfahrens sind in den Figuren beispielhaft dargestellt und werden anhand der nachfolgenden Beschreibung näher erläutert. Es zeigen in schematischer Darstellung:
- Fig. 1:: ein Ablaufdiagramm eines erfindungsgemäßen computergestützten Verfahrens zum Steuern einer Werkzeugmaschine;
- Fig. 2:: ein Ausführungsbeispiel eines erfindungsgemäßen Steuersystems zum Steuern von Werkzeugmaschinen in Blockdarstellung;
- Fig. 3:: ein Ausführungsbeispiel einer Steuerung von Werkzeugmaschinen mittels eines erfindungsgemäßen Steuersystems;
- Fig. 4:: ein weiteres Ausführungsbeispiel einer Steuerung von Werkzeugmaschinen mittels eines erfindungsgemäßen Steuersystems; und
- Fig. 5:: ein weiteres Ausführungsbeispiel einer Steuerung von Werkzeugmaschinen mittels eines erfindungsgemäßen Steuersystems.

Einander entsprechende Gegenstände sind in allen Figuren mit den gleichen Bezugszeichen versehen.

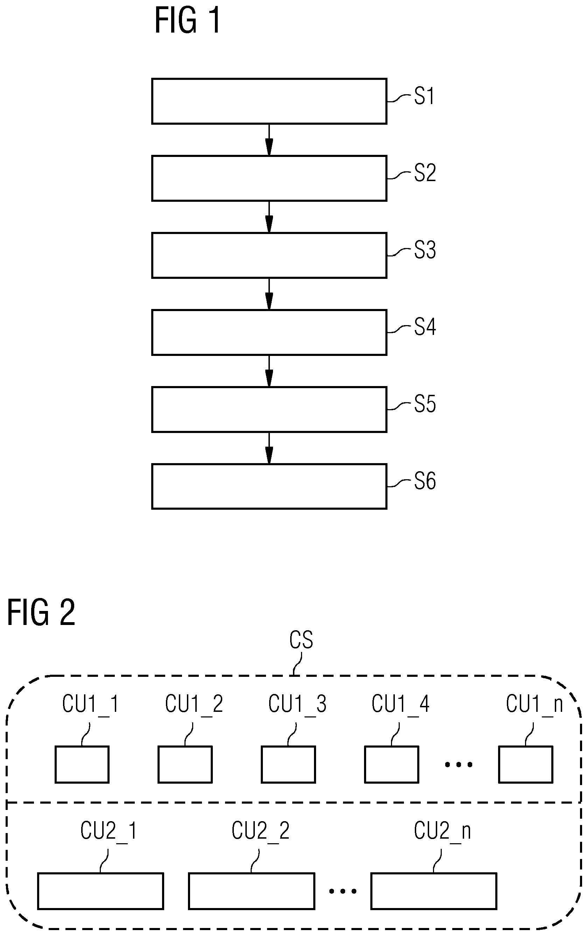

Figur 1 zeigt ein Ablaufdiagramm eines erfindungsgemäßen computergestützten Verfahrens zum Steuern einer Werkzeugmaschine. Vorzugsweise kann mit dem Verfahren eine Vielzahl an Werkzeugmaschinen gesteuert werden, die beispielsweise gleichartige oder verschiedene Aufgaben erfüllen.

Der erste Schritt S1 des Verfahrens umfasst das Ermitteln von Funktionen, die von einer oder mehreren der zu steuernden Werkzeugmaschinen ausgeführt werden können. Beispielsweise handelt es sich um mindestens eine Bohrmaschine und mindestens eine Fräsmaschine, die beispielsweise in einer Fertigungsanlage angeordnet sind. Beide Werkzeugmaschinen umfassen gleichartige Funktionen, wie z.B. eine mechanische Bewegung des Bohr- bzw. Fräskopfes, eine Not-Aus-Funktion und/oder eine Wartungsfunktion. Die verschiedenen Funktionen einer jeweiligen Werkzeugmaschine können beispielsweise anhand eines Maschinendatenblattes ermittelt werden. Insbesondere können Funktionen anhand von Prozessdaten abgeleitet werden.

Im folgenden Schritt S2 des Verfahrens werden die ermittelten Funktionen anhand von vorgegebenen Kriterien zusammengefasst bzw. gruppiert. Insbesondere wird geprüft, ob eine ermittelte Funktion sicherheitskritisch, qualitätskritisch, zeitkritisch und/oder ressourcenintensiv ist.

Eine Funktion ist sicherheitskritisch, wenn beispielsweise ihre Ausführung die Sicherheit des Betriebs der Werkzeugmaschine gewährleistet. Eine sicherheitskritische Funktion kann beispielsweise eine Wartungsfunktion umfassen.

Eine Funktion ist qualitätskritisch, wenn beispielsweise eine Qualität eines durch die Werkzeugmaschine erzeugten Produkts von der Ausführung dieser Funktion abhängt.

Eine Funktion ist zeitkritisch, wenn beispielsweise die Ausführung in Echtzeit erfolgen soll.

Eine Funktion ist ressourcenintensiv, wenn beispielsweise ein hoher Datentransfer oder ein hoher Energieverbrauch oder ähnliches für die Ausführung notwendig ist.

Die ermittelten Funktionen werden insbesondere in erste Funktionen und zweite Funktionen klassifiziert und eingeteilt, wobei erste Funktionen diejenigen Funktionen umfassen, die als zeitkritisch, qualitätskritisch und/oder ressourcenintensiv ermittelt wurden, und wobei die zweiten Funktionen diejenigen Funktionen umfassen, die als sicherheitskritisch, nicht zeitkritisch, nicht qualitätskritisch und/oder nicht ressourcenintensiv ermittelt wurden. In anderen Worten, abhängig von diesen Kriterien können Funktionen als erste oder zweite Funktionen ermittelt werden. Es können beispielsweise Gruppen von ersten Funktionen und/oder Gruppen von zweiten Funktionen gebildet werden.

Im nächsten Schritt S3 wird für jede der ermittelten ersten oder zweiten Funktionen Steuerbefehle abgeleitet bzw. ermittelt und bereitgestellt. Beispielsweise wird ein Steuerbefehl für eine Wartungsfunktion als Programmcode bereitgestellt. Vorzugsweise lässt sich mittels eines Steuerbefehls jede der Werkzeugmaschinen, die die entsprechende damit gesteuerte Funktion ausführen kann bzw. auf der die entsprechende Funktion ausgeführt werden kann, steuern.

Beispielsweise kann ein Steuerbefehl für eine mechanische Bewegung eines Teils einer Werkzeugmaschine ermittelt werden. Vorzugsweise ist die mechanische Bewegung gleich einer mechanischen Bewegung einer anderen Werkzeugmaschine. Mittels des Steuerbefehls kann die mechanische Bewegung, d.h. die Funktion, an beiden Werkzeugmaschinen gesteuert werden.

In den folgenden Schritten S4 und S5 des Verfahrens werden die ermittelten Steuerbefehle mindestens einer ersten oder einer zweiten Steuereinheit eines Steuersystems zugeordnet. Die Zuordnung erfolgt abhängig davon, ob ein Steuerbefehl eine erste oder eine zweite Funktion steuert. Unter "Zuordnung" kann insbesondere eine Konfiguration oder Installation der Steuerbefehle auf einer Steuereinheit verstanden werden. Die Steuereinheiten werden derart eingerichtet, dass sie jeweils die zugeordneten Steuerbefehle an mindestens eine Werkzeugmaschine ausgeben können, so dass die Werkzeugmaschine gemäß dem Steuerbefehl die Funktion ausführen kann.

Das Steuersystem ist insbesondere von den zu steuernden Werkzeugmaschinen separiert, d.h. ist lediglich über eine Kommunikationsverbindung mit diesen gekoppelt, aber nicht auf diesen fest integriert. Das Steuersystem umfasst mindestens eine erste Steuereinheit und mindestens eine zweite Steuereinheit.

Der ersten Steuereinheit werden alle Steuerbefehle zugeordnet, die für die Ausführung von ersten Funktionen geeignet sind, siehe Schritt S4.

Entsprechend werden die Steuerbefehle für zweite Funktionen der mindestens einen zweiten Steuereinheit zugeordnet, siehe Schritt S5.

Eine erste bzw. eine zweite Steuereinheit umfasst mindestens einen Steuerbefehl für eine erste bzw. zweite Funktion. Vorzugsweise umfasst das Steuersystem mehr als eine erste und/oder zweite Steuereinheit, die jeweils mindestens einen ersten bzw. zweiten Steuerbefehl an mindestens eine Werkzeugmaschine ausgeben können.

Im folgenden Schritt S6 wird mittels des Steuersystems mindestens eine Werkzeugmaschine gesteuert. Mittels der ersten Steuereinheit werden erste Funktionen und mittels der zweiten Steuereinheit werden zweite Funktionen geregelt. Das Steuersystem kann insbesondere eine Vielzahl von verschiedenen Werkzeugmaschinen steuern, wobei insbesondere gleichartige Funktionen der verschiedenen Werkzeugmaschinen gebündelt von einer ersten oder zweiten Steuereinheit gesteuert werden.

Figur 2 zeigt in Blockdarstellung ein erfindungsgemäßes Steuersystem CS, das eine Vielzahl an ersten Steuereinheiten CU1_1, CU1_2, ..., CU1_n und eine Vielzahl an zweiten Steuereinheiten CU2_1, CU2_2, ..., CU2_n umfasst. Die ersten Steuereinheiten CU1 1, CU1 2, ..., CU1_n sind von den zweiten Steuereinheiten CU2_1, CU2_2, ..., CU2_n physikalisch und/oder räumlich getrennt, sind aber über Kommunikationsverbindungen miteinander verbunden und bilden gemeinsam das Steuersystem CS. Die Architektur des Steuersystems CS umfasst somit zwei Ebenen.

Die Steuereinheiten können hardwaretechnisch oder softwaretechnisch realisiert sein. Die Steuereinheiten sind über Daten- oder Kommunikationsverbindungen mit mindestens einer Werkzeugmaschine gekoppelt. Die Steuereinheiten übermitteln Steuerbefehle an eine Werkzeugmaschine und/oder empfangen Daten von dieser. Die Steuerung erfolgt als kollektive Steuerung durch die Steuereinheiten des Steuersystems CS. Für die Steuerung von mindestens einer Werkzeugmaschine können alle Steuereinheiten und/oder nur ein Teil der Steuereinheiten beteiligt sein. Die Beteiligung kann insbesondere von den Funktionen die auf einer Werkzeugmaschine oder von einer Werkzeugmaschine ausgeführt werden abhängig sein. In anderen Worten, es sind lediglich diejenigen Steuereinheiten aktiv am Steuerungsprozess beteiligt, denen für die auszuführende Funktion Steuerbefehle zugeordnet sind.

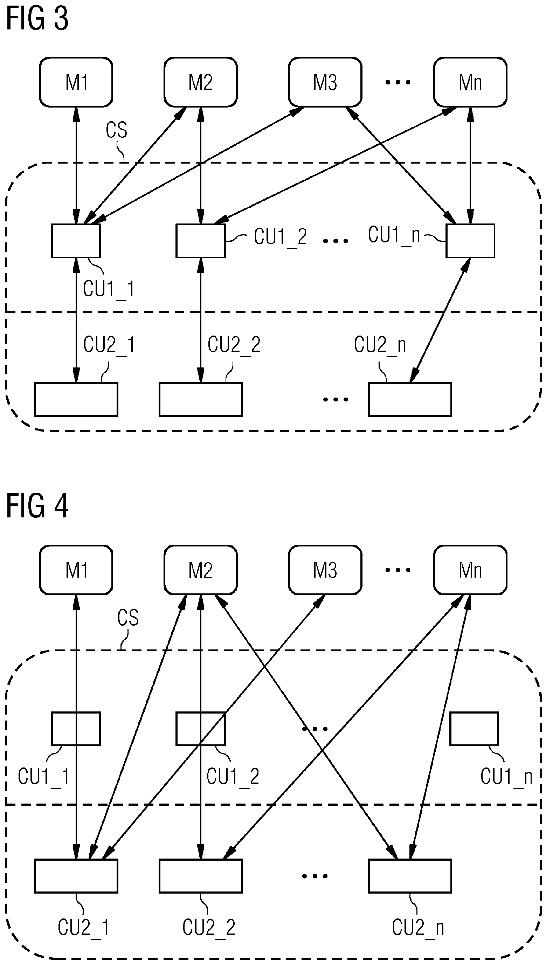

Figur 3 zeigt ein Ausführungsbeispiel einer Steuerung von Werkzeugmaschinen mittels eines erfindungsgemäßen Steuersystems CS, das erste Steuereinheiten CU1_1, CU1_2, ..., CU1_n und zweite Steuereinheiten CU2_1, CU2_2, ..., CU2_n umfasst. Es ist eine Vielzahl an Werkzeugmaschinen M1, M2, M3, ..., Mn gezeigt, die beispielsweise voneinander verschiedene Aufgaben erfüllen, aber dabei gleichartige Funktionen oder Unterfunktionen ausführen. Die Werkzeugmaschinen M1,..., Mn werden sowohl von der ersten Ebene, d.h. den ersten Steuereinheiten CU1_1, CU1_2, ..., CU1_n, als auch von der zweiten Ebene, d.h. den zweiten Steuereinheiten CU2_1, CU2_2, ..., CU2_n, des Steuersystems CS gesteuert.

Zeitkritische, qualitätskritische und/oder ressourcenintensive Funktionen der Werkzeugmaschinen M1, M2, M3, ..., Mn werden durch die ersten Steuereinheiten CU1_1, CU1_2, ..., CU1_n gesteuert.

Sicherheitskritische, nicht zeitkritische, nicht qualitätskritische und/oder nicht ressourcenintensive Funktionen werden von den zweiten Steuereinheiten CU2_1, CU2_2, ..., CU2_n gesteuert. Insbesondere kann jede erste oder zweite Steuereinheit mehr als eine Werkzeugmaschine steuern.

Die ersten Steuereinheiten CU1_1, CU1_2, ..., CU1_n können jeweils mindestens einen ersten Steuerbefehl oder eine Gruppe oder Kombination aus ersten Steuerbefehlen ausgeben. Insbesondere kann mehr als eine erste Steuereinheit einen gleichen ersten Steuerbefehl ausgeben. Dies dient als Backup und stellt damit die Steuerung der entsprechenden Funktion sicher.

Analog können auch die zweiten Steuereinheiten jeweils gleiche zweite Steuerbefehle ausgeben.

Insbesondere können zweite Funktionen von den zweiten Steuereinheiten gesteuert werden, indem Steuerbefehle zunächst an die ersten Steuereinheiten übermittelt und von dort an die Werkzeugmaschinen ausgegeben werden.

Figur 4 zeigt ein weiteres Ausführungsbeispiel einer Steuerung einer Vielzahl von Werkzeugmaschinen M1, M2, M3, ..., Mn mittels eines erfindungsgemäßen Steuersystems CS. Bei Ausfall oder Überlastung einer oder mehrerer der ersten Steuereinheiten CU1_1, CU1_2, ..., CU1_n können die ersten Steuerbefehle von den zweiten Steuereinheiten CU2 1, CU2 2, ..., CU2 n zumindest temporär ausgeführt werden. Dazu werden die entsprechenden Steuerbefehle an die zweiten Steuereinheiten CU2 1, CU2_2, ..., CU2_n übermittelt. Die Übermittlung kann drahtgebunden oder drahtlos, insbesondere basierend auf einem Kommunikationsprotokoll, erfolgen. Die zweiten Steuereinheiten CU2_1, CU2_2, ..., CU2_n übermitteln demnach direkt die ersten Steuerbefehle an die Werkzeugmaschinen M1, M2, M3, ..., Mn.

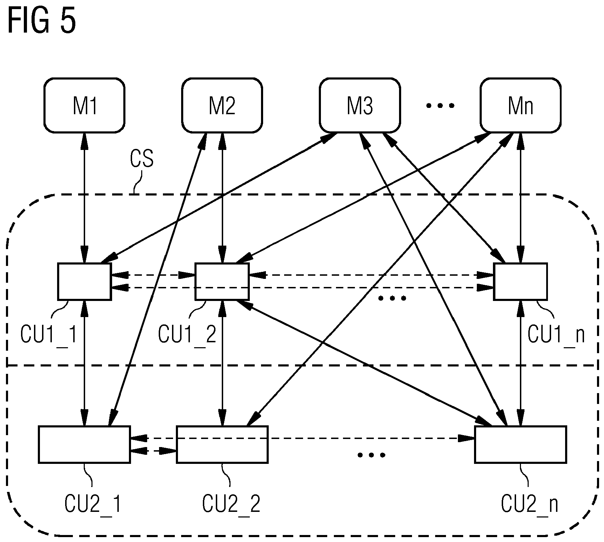

Figur 5 zeigt ein weiteres Ausführungsbeispiel einer Steuerung einer Vielzahl von Werkzeugmaschinen M1, M2, M3, ..., Mn mittels eines erfindungsgemäßen Steuersystems CS.

Die Werkzeugmaschinen M1, ..., Mn können verschiedenartig sein, d.h. können beispielsweise für verschiedene Konstruktionsaufgaben bestimmt sein. Gemeinsame erste Funktionen können von mindestens einer der ersten Steuereinheiten CU1 1, ..., CU1_n gesteuert werden. Zweite Funktionen werden von den zweiten Steuereinheiten CU2_1, CU2_2, ..., CU2_n gesteuert. Die Steuerungsfunktionalität wird vorzugsweise von den Werkzeugmaschinen getrennt und im erfindungsgemäßen Steuerungssystem CS gebündelt. Die Trennung der ersten von den zweiten Steuereinheiten erlaubt eine Steuerung auf der Basis des Edge- und Cloud-Computings.

Insbesondere können die ersten Steuereinheiten CU1_1, ..., CU1_n und die zweiten Steuereinheiten CU2_1, CU2_2, ..., CU2_n untereinander zwischen den beiden Ebenen Informationen austauschen. Dies erlaubt einen Abstimmungsprozess durchzuführen. Ein Abstimmungsprozess kann beispielsweise die Reihenfolge von Steuerbefehlen für eine Werkzeugmaschine oder die Reihenfolge für die Steuerung einer gleichen Funktion für mehrere Werkzeugmaschinen bestimmen. Außerdem kann mittels eines Abstimmungsprozesses eine effiziente Steuerungsstrategie ausgehandelt werden. Die ersten und/oder zweiten Steuereinheiten können somit kollaborativ zusammenarbeiten.

Bei einer dezentralen Koordination kann eine Entscheidung auf einer Werkzeugmaschine getroffen werden. Die Entscheidungsbasis ist ein maschineneigener Zustand und Anfragen, die die Maschine bekommt. Eine Steuereinheit kann die Steuerung der Werkzeugmaschinen derart koordinieren, dass beispielsweise eine Kapazität, Auslastung, Priorität oder Preis eines Produkts optimiert wird.

Eine zentrale Abstimmung kann beispielsweise über einen zentralen Prozessor erfolgen, der die Abfolge einzelner Prozessschritte verwaltet. Alternativ kann die Abstimmung mittels Informationen von benachbarten oder gleichartigen Steuereinheiten erfolgen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Steuersystem zum Steuern einer Werkzeugmaschine, umfassend eine erste Steuereinheit und eine zweite Steuereinheit, wobei
- ein erster Steuerbefehl für eine erste Funktion einer Werkzeugmaschine, deren Ausführung zeitkritisch, qualitätskritisch und/oder ressourcenintensiv ist, der ersten Steuereinheit zugeordnet ist,
- ein zweiter Steuerbefehl für eine zweite Funktion einer Werkzeugmaschine, deren Ausführung sicherheitskritisch, nicht zeitkritisch, nicht qualitätskritisch und/oder nicht ressourcenintensiv ist, der zweiten Steuereinheit zugeordnet ist, und
- das Steuersystem separiert von einer zu steuernden Werkzeugmaschine und derart eingerichtet ist, eine erste Funktion der Werkzeugmaschine mittels der ersten Steuereinheit und eine zweite Funktion der Werkzeugmaschine mittels der zweiten Steuereinheit zu steuern.

2. Steuersystem nach Anspruch 1, das mit einem Bereitstellungsmodul gekoppelt ist, das derart eingerichtet ist, Funktionen der Werkzeugmaschine zu ermitteln und zu bestimmen, ob deren Ausführung sicherheitskritisch, qualitätskritisch, zeitkritisch und/oder ressourcenintensiv ist, und dem Steuersystem bereitzustellen.

3. Steuersystem nach einem der vorhergehenden Ansprüche, wobei das Steuersystem mehr als eine erste und/oder mehr als eine zweite Steuereinheit umfasst.

4. Steuersystem nach einem der vorhergehenden Ansprüche, wobei der ersten und/oder zweiten Steuereinheit jeweils mehr als ein erster oder zweiter Steuerbefehl zugeordnet sind.

5. Steuersystem nach einem der vorhergehenden Ansprüche, wobei eine erste Steuereinheit und/oder zweite Steuereinheit mehr als eine Werkzeugmaschine steuert.

6. Steuersystem nach einem der vorhergehenden Ansprüche, wobei einer zweiten Steuereinheit zumindest temporär mindestens ein erster Steuerbefehl zugeordnet ist und die zweite Steuereinheit mittels dieses ersten Steuerbefehls zumindest temporär die dem Steuerbefehl entsprechende Funktion der Werkzeugmaschinen steuert.

7. Steuersystem nach einem der vorhergehenden Ansprüche, wobei die ersten Steuereinheiten und die zweiten Steuereinheiten derart miteinander gekoppelt sind, dass eine Steuerung der Werkzeugmaschinen über einen Abstimmungsprozess untereinander koordiniert wird.

8. Computergestütztes Verfahren zum Steuern einer Werkzeugmaschine, wobei
- ein erster Steuerbefehl für eine erste Funktion einer Werkzeugmaschine, deren Ausführung zeitkritisch, qualitätskritisch und/oder ressourcenintensiv ist, einer ersten Steuereinheit zugeordnet wird (S4),
- ein zweiter Steuerbefehl für eine zweite Funktion einer Werkzeugmaschine, deren Ausführung sicherheitskritisch, nicht zeitkritisch, nicht qualitätskritisch und/oder nicht ressourcenintensiv ist, einer zweiten Steuereinheit zugeordnet wird (S5),
- die erste Funktion einer Werkzeugmaschine mittels der ersten Steuereinheit und die zweite Funktion mittels der zweiten Steuereinheit eines Steuersystems, das die erste Steuereinheit und die zweite Steuereinheit umfasst und separiert von der zu steuernden Werkzeugmaschine eingerichtet ist, gesteuert werden (S6).

9. Computergestütztes Verfahren nach Anspruch 8, wobei Funktionen der Werkzeugmaschinen ermittelt werden (S1) und bestimmt wird, ob deren Ausführung sicherheitskritisch, qualitätskritisch, zeitkritisch und/oder ressourcenintensiv ist (S2) .

10. Computergestütztes Verfahren nach Anspruch 9, wobei für die ermittelten Funktionen jeweils entsprechende Steuerbefehle ermittelt werden (S3).

11. Computergestütztes Verfahren nach Anspruch 8 bis 10, wobei mehrere Werkzeugmaschinen von dem Steuersystem gesteuert werden, wobei das Steuersystem mehr als eine erste Steuereinheit und/oder mehr als eine zweite Steuereinheit umfasst.

12. Computergestütztes Verfahren nach Anspruch 8 bis 11, wobei ein erster und/oder zweiter Steuerbefehl jeweils mehr als einer ersten und/oder zweiten Steuereinheit zugeordnet wird.

13. Computergestütztes Verfahren nach Anspruch 8 oder 12, wobei mehr als eine Werkzeugmaschine von einer ersten Steuereinheit und/oder einer zweiten Steuereinheit gesteuert werden.

14. Computergestütztes Verfahren nach Anspruch 8 bis 13, wobei einer zweiten Steuereinheit zumindest temporär mindestens ein erster Steuerbefehl zugeordnet wird und dieser zumindest temporär von dieser zweiten Steuereinheit ausgegeben wird.

15. Computergestütztes Verfahren nach Anspruch 8 bis 14, wobei die Steuerung der Werkzeugmaschinen über einen Abstimmungsprozess zwischen den Steuereinheiten, bei dem die ersten Steuereinheiten und die zweiten Steuereinheiten untereinander Daten austauschen koordiniert werden.

16. Computerprogrammprodukt, umfassend Programmcodeteile, die bei der Ausführung des Programms durch einen Computer diesen veranlassen, das Verfahren/die Schritte eines Verfahrens nach Anspruch 8 bis 15 auszuführen.
